# EUROPEAN PATENT APPLICATION

(11) **EP 4 651 468 A1**
(43) Date of publication of application: **19.11.2025**
(21) Application number: 24176152.7
(22) Date of filing: 16.05.2024
(51) Int. Cl.: H04L 67/12, H04L 67/565

(54) **COMPUTER-IMPLEMENTED METHOD AND SYSTEM FOR AN AUTOMATED TRANSFORMATION OF DATA INFORMATION FOR AT LEAST A FIELD DEVICE**

(71) Applicant: ABB SCHWEIZ AG, 5400 Baden (CH)
(72) Inventor: KARAAGAC, Abdulkadir, 68526 Ladenburg (DE)
(74) Representative: Maiwald GmbH

(57) **Abstract**

The present invention relates to a computer-implemented method (100) for an automated transformation of data information (10) for at least a field device (50), comprising:
- receiving (102), by the field device (50), the data information (10) sent by an entity device (52);
- sending (106), by the at least one field device (50), a transformation request (15) containing at least the received data information (10) to a transformation device (70),
- determining (108), by the transformation device (70), a corresponding transformation function (20) based on the received data information (10), wherein the transformation function (20) is able to transform the received data information (10) from a first information format (12) into a target and second information format (14) that can be processed by the requesting and at least one field device (50);
- providing (110), by the transformation device (70), the determined transformation function (20) to the requesting and at least one field device (50);
- executing (112), by the at least one field device (50), the received transformation function (20) to transform the received data information (10) into the second information format (14) that can be processed by the at least one field device (50 ).

## Description

### FIELD OF THE INVENTION

The present invention relates to a computer-implemented method and system for an automated transformation of data information for at least a field device.

### BACKGROUND OF THE INVENTION

Industrial domains continue to witness the development and adoption of various application protocols, while advancing in capability, which introduce a layer of intricacy into the overall industrial landscape. Moreover, Industrial sites and systems are increasingly characterized by the simultaneous use of multiple technologies. Even within a single technology domain, the use of diverse information and data models, such as companion specifications and vendor-specific models, further compounds the complexity.

The coexistence of varying information models, even among communication protocols designed for similar purposes, creates semantic incompatibility, leading to a critical problem: semantic incompatibility and lack of shared meaning in the factory floor. This lack of semantic compatibility between interconnected devices and systems jeopardizes effective communication and data exchange, it can even result in misunderstandings, errors, and, significantly, security risks. Additionally, Futher, the introduction of new information models or extensions to existing models can create backwards incompatibility, rendering previously integrated systems incompatible.

In light of these challenges, a critical need emerges for a forward-thinking solution that can bridge the semantic gap and streamline integration for field devices in the Internet of Things (IoT) era. An automated transformation solution is essential to ensure that devices, systems, and protocols can communicate seamlessly and share a common understanding, thereby enhancing operational efficiency, reliability, and security on the factory floor. In this context, the EP4102424 A1 provides a demand driven automated model transformation concept.

In summary, the processes of system integration and information translation heavily rely on the integration of various information resources through manual effort or gateway devices. These gateways translate and forward information/data or data information to an intended receiver, necessitating the constant flow of data through these gateways, even among field devices.

However, this approach incurs additional communication costs and delays in application packets and hinders to achieve a seamless integration and data exchange between communication devices.

There is a need to address these issues.

### SUMMARY OF THE INVENTION

Therefore, it would be advantageous to provide an improved concept for an automated transformation of data information for at least a field device to achieve a seamless data integration and data exchange between the at least field device and other communication devices.

The object of the present invention is solved by the subject matter of the independent claims, wherein further embodiments are incorporated in the dependent claims.

In a first aspect of the present invention, there is provided a computer-implemented method for an automated transformation of data information for at least a field device, comprising the following steps:
- Receiving, by the field device, the data information sent by an entity device;
- Sending, by the at least one field device, a transformation request containing at least the received data information to a transformation device,
- Determining, by the transformation device, a corresponding transformation function based on the received data information, wherein the transformation function is able to transform the received data information from a first information format into a target and second information format that can be processed by the requesting and at least one field device;
- Providing, by the transformation device, the determined transformation function to the requesting and at least one field device;
- Executing, by the at least one field device, the received transformation function to transform the received data information into the second information format that can be processed by the at least one field device.

In other words, an important aspect of the present invention is to enable in-situ execution of information transformation functions in the field devices themselves. In detail, the information model transformation and device integration is done by executing a remotely created or provided information broker, translation function or transformation function in the field devices wherever and whenever needed.

To do so, upon reception of a packet of an unknown model, field devices get remote support from another more powerful entity, e.g. an edge device or cloud device or the like in order to obtain a transformation function that could translate the information into the demanded format or data model that can be understood and processed by the field device in order to achieve a seamless data or information exchange between the field device and its corresponding communication device without any interruptions or delays in the communication or data flow.

In this way, the device integration and information transformation process for an industrial system and loT applications is improved.

Further, the present invention provides the following advantages:
The present invention allows to accelerate application development processes, facilitate the information integration operations and ultimately reduce operation costs.

The present invention overcomes the struggles of protocol and semantic incompatibility by easing support for new/complex information models without any change on existing devices: future-proof / ever-green systems.

The present invention improves the creation of connected industrial systems by differentiation in simpler system integration and seamless device interoperation.

The present invention eliminates or at least reduces dependency on the device hardware capabilities and resources in order to support complicated and abundant number of information models.

The present invention eases and speeds-up the data transformation operations for field devices by executing those operations on the field devices themselves.

Further, a minimized engineering effort during system integration and extension reduces operational costs and create faster development.

According to an example, after the step of obtaining the data information, a step of validating the received data information, by the at least field device, is performed, whether the at least one field device has the capability to process the received data information. In this way, the process of transformation of data information is improved and a seamless communication flow or data exchange between the at least one field device and the entity device is ensured.

According to an example, the transformation request contains a device information about the at least field device. In this way, the determination of the transformation function is adapted to the technical requirements of the at least field device in an efficient manner.

According to an example, the device information is at least one of the following: data model information, type of the device, functionality of the device. In this way, the determination of the transformation function is adapted to the technical requirements of the at least field device in an efficient manner.

According to an example, the transformation device is an entity that is at least partly remote to the at least one field device and can be at least one of the following: an edge device, a cloud-based device, a server-based device. In this way, process of transformation of the data information is performed in an efficient and cost-saving manner.

According to an example, the first information format is configured as a model-based information. In this way, the transformation function is adapted to a used model by the at least field device in an efficient manner.

According to an example, the determined transformation function is configured as an executable container or a virtual image that includes a translation capability or translation functionality required by the requesting and at least one field device. In this way, the determined transformation function can be provided in an efficient manner to the at least field device.

According to an example, the determined transformation function is provided as downloadable or distributable software component to the at least one field device, n this way, the determined transformation function can be provided in an efficient manner to the at least field device.

According to an example, the step of executing is performed whenever required to enable a data flow between the at least one field device and the entity device. In this way, a continuous or seamless data flow or data exchange is ensured between the at least one field device and the entity device.

In a second aspect of the present invention, a system that is configured to execute the method according any of the previous examples and / or according to the first aspect for an automated transformation of a data information for at least a field device is provided.

In a third aspect of the present invention, a computer comprising a processor configured to perform the method according to the first aspect and / or according to any of the previous examples is provided.

In a fourth aspect of the present invention, a computer program product comprising instructions which, when the computer program is executed by a processor of a computer, causes the computer to perform the method of the first aspect and / or of any of the previous examples.

In a fifth aspect of the present invention, a machine-readable data medium and / or download product is provided containing the computer program according to the fourth aspect.

### BRIEF DESCRIPTION OF THE DRAWINGS

Exemplary embodiments will be described in the following with reference to the following drawings:
Fig. 1 illustrates a schematic flow-diagram of a method of the present invention according to an embodiment of the present invention;
Fig. 2 illustrates a schematic diagram of a system of the present invention to implement the method of the present invention according to an embodiment of the present invention.

### DETAILED DESCRIPTION OF THE DRAWINGS

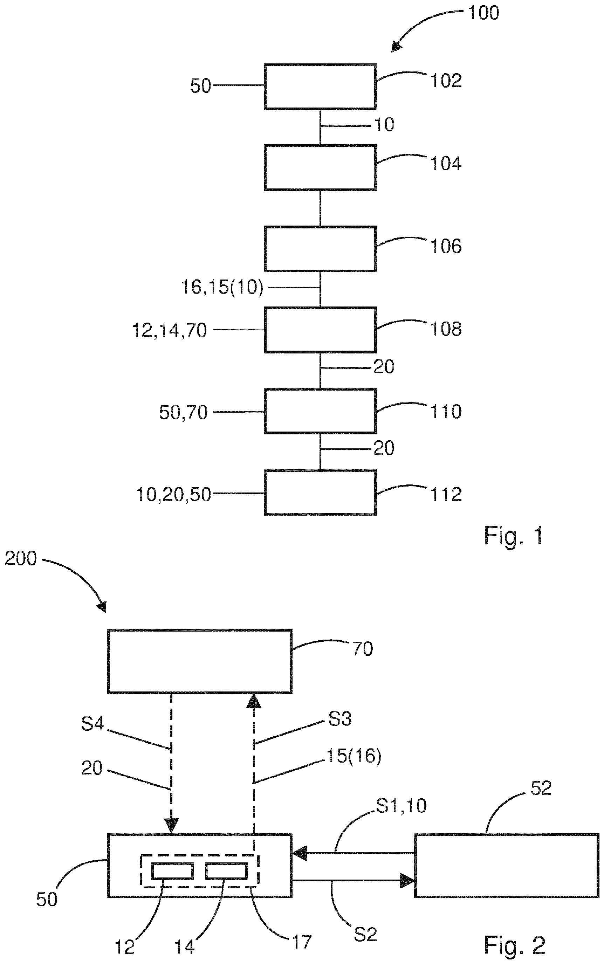

Fig. 1 illustrates a schematic flow-diagram of a method 100 of the present invention according to an embodiment of the present invention.

In a first step 102, a data information 10, sent by an entity device 52, is received by the at least one field device 50. The data information 10 may be a data packet that needs to be processed by the at least first field device 50 in a certain manner, e.g. to uphold a seamless data flow between the field device 50 and the entity device 52.

Optionally, after the step 102 of obtaining the data information 10, a step 104 of validating the received data information 10, by the at least field device 50, is performed, whether the at least one field device 50 has the capability to process the received data information 10. The step of validating may include to first check by the field device 50, whether there is already a locally stored transformation function within a storage of the field device 50 that can be used before performing step 106 of generating a corresponding transformation request 15.

In a second step 106, a transformation request 15 containing at least the received data information 10, is sent to a transformation device 70 by the at least one field device 50.

Optionally, the transformation request 15 contains a device information 16 about the at least field device 50.

The device information 16 is at least one of the following: a data model information, a type of the device 50, a functionality of the device 50.

Further examples for a device information 16 may be a data model of the field device 50, information about supported protocols by the field device 50, information about a model language used by the field device 50.

The device information 16 may contain also other or further information relating to technical specifics of the field device 50 to process the received data information 10.

Optionally, the transformation device 70 is an entity that is at least partly remote to the at least one field device 50 and can be at least one of the following: an edge device, a cloud-based device, a server-based device or any other device with technical resources capable of performing the steps 106 and 108.

In a third step 108, a corresponding transformation function 20 based on the received data information 10 is determined by the transformation device 70, wherein the transformation function 20 is able to transform the received data information 10 from a first information format or a first information structure 12 into a target and second information format 14 that can be processed by the requesting and at least one field device 50.

Optionally, the first information format or first information structure 12 is configured as a model-based information, but can be also any other suitable type of information.

The determining of the transformation function 20 may also be interpreted in the context of the present invention as calculating of a transformation function, creating of a transformation function, selecting of an already existing transformation function, combining of multiple existing transformation functions 20.

In a fourth step 110, the determined transformation function 20 is provided by the transformation device 70 to the requesting and at least one field device 50.

Providing in the context of this invention may also be interpreted as downloading or distributing.

Optionally, the determined transformation function 20 is configured as an executable container or a virtual image that includes a translation capability or a translation functionality required by the requesting and at least one field device 50. In a further example, the determined transformation function 20 may also be a handeled at least partly as a software upgrade for the at least field device 50.

Optionally, the determined transformation function 20 is provided as downloadable or distributable software component to the at least one field device 50.

In a fifth step 112, the received transformation function 20 is executed by the at least one field device 50 to transform the received data information 10 into the second information format 14 that can be processed by the at least one field device 50.

Optionally, the step 112 of executing is performed whenever required in a multiple or continuous manner to enable a seamless or contiuous data flow between the at least one field device 50 and the entity device 52.

Fig. 2 illustrates a schematic diagram of a system 200 of the present invention to implement the method 100 of the present invention according to an embodiment of the present invention.

The system 200 includes the field device 50, the transformation device or entity 70 and the entity device 52. The entity device 52 is part of the system 200 insofar as it sends the data information 10 to the field device 50 via a signal path S1.

The field device 50 sends a transformation request 15 on a signal path S2 to the remote transformation device 70 hosting a Transformation Agent (TA).

The transformation device 70 determines a corresponding transformation function 20 on basis of the received transformation request 15 and sends or returns the determined transformation function 20 back to the field device 50 on the signal path S4.

The field device 50 receives the transformation function 20 and processes the data information 10, by an internal information broker (IB), by executing the transformation function 20 by transforming the data information 10 continuously for understanding the meaning of the data information 10, and afterwards, sends the processed data information 10 as a new or second data information back to the entity device 52 on the signal path S3.

The transformation function 20 may be portable and can be downloaded to devices as executable virtual image/container (only if the device supports virtualization/containerization) or as remote firmware/software upgrade).

In the former approach, it's imperative that the field devices are equipped with virtualization or containerization support and must be capable of running virtual machines or instances, or containers.

The transformation function 20 is created by the ransformation device 70 as executable containers or virtual images that includes the required translation capabilities. The next step involves the downloading of these software components onto the field device 50 utilizing communication protocols. Subsequently, the transformation function is executed on the field device 50 as software application, often encapsulated in containers. This execution facilitates seamless and continuous information exchange among the devices.

In the latter approach (remote software/firmware upgrades), the firmware (embedded software) is prepared / modified with the help of the Transformation Agent of the transformation device 70 so that new/modified firmware includes the required Transformation Function. After that, the new firmware is transferred (entire firmware or partially modified sections/components) to the field devices using lightweight communication protocols.

When the download and an installation process is completed, the continuous information exchange can start between field device 50 and the entity device 52 utilizing the available transformation function.

In this context, a transformation Library (TL) in the transformation agent of the transformation device 70 is used that is a growing system/transformation/modeling knowledge as the collection of transformation functionalities.

A transformation engine (TE) in the Transformation agent of the transformation device 70 is a unit that is responsible for automatically selecting needed transformation function or creating one if needed, and download that to field equipment.

Model Transformation Functions as are Reusable Functional Blocks (Black box) which can be created, transferred and executed as independent software components.

As the Transformation Agent and corresponding functionality can be offered via cloud technology, it is also possible to offer the remote transformation capabilities as cloud services.

Since nformation broker's in field devices are continuously monitoring for new communication demands or changes in the existing demands, the present inventon also addresses dynamic system, where the exchanged (incoming/outgoing) information might change over time. Changing the capability of field devices requires careful planning, testing, and validation to ensure that the modifications do not introduce vulnerabilities or instability.

### Reference signs

- 10: Data information
- 12: First information format / structure
- 14: Second information format
- 15: (Data) Transformation request
- 16: Device information
- 17: Transformation container
- 20: Transformation function
- 50: Field device
- 52: Entity device
- 70: Transformation device / entity
- S1: Signal path 1
- S2: Signal path 2
- S3: Signal path 3
- S4: Signal path 4

- 100: Method
- 102: Receiving
- 104: Validating
- 106: Sending
- 108: Determining
- 110: Providing
- 112: Executing

- 200: System

## Claims

1. Computer-implemented method (100) for an automated transformation of data information (10) for at least a field device (50), comprising:
- receiving (102), by the field device (50), the data information (10) sent by an entity device (52);
- sending (106), by the at least one field device (50), a transformation request (15) containing at least the received data information (10) to a transformation device (70),
- determining (108), by the transformation device (70), a corresponding transformation function (20) based on the received data information (10), wherein the transformation function (20) is able to transform the received data information (10) from a first information format (12) into a target and second information format (14) that can be processed by the requesting and at least one field device (50);
- providing (110), by the transformation device (70), the determined transformation function (20) to the requesting and at least one field device (50);
- executing (112), by the at least one field device (50), the received transformation function (20) to transform the received data information (10) into the second information format (14) that can be processed by the at least one field device (50).

2. Computer-implemented method (100) according to claim 1, wherein after the step (102) of obtaining the data information (10), a step (104) of validating the received data information (10), by the at least field device (50), is performed, whether the at least one field device (50) has the capability to process the received data information (10).

3. Computer-implemented method (100) according to any of the previous claims, wherein the transformation request (15) contains a device information (16) about the at least field device (50).

4. Computer-implemented method (100) according to claim 3, wherein the device information (16) is at least one of the following: data model information, type of the device (50), functionality of the device (50).

5. Computer-implemented method (100) according to any of the previous claims, wherein the transformation device (70) is an entity that is at least partly remote to the at least one field device (50) and can be at least one of the following: an edge device, a cloud-based device, a server-based device.

6. Computer-implemented method (100) according to any of the previous claims, wherein the first information format (12) is configured as a model-based information.

7. Computer-implemented method (100) according to any of the previous claims, wherein the determined transformation function (20) is configured as an executable container or a virtual image that includes a translation capability or a translation functionality required by the requesting and at least one field device (50).

8. Computer-implemented method (100) according to any of the previous claims, wherein the determined transformation function (20) is provided as downloadable or distributable software component to the at least one field device (50).

9. Computer-implemented method (100) according to any of the previous claims, wherein the step (112) of executing is performed whenever required to enable a data flow between the at least one field device (50) and the entity device (52).

10. System (200) configured to execute the method according one of the previous claims for an automated transformation of a data information (10) for at least a field device (50).

11. A computer comprising a processor configured to perform the method of any preceding claims 1 to 9.

12. A computer program product comprising instructions which, when the computer program is executed by a processor of a computer, causes the computer to perform the method of any of claims 1 to 9.

13. Machine-readable data medium and / or download product containing the computer program according to claim 12.
